# EUROPEAN PATENT SPECIFICATION

(11) **EP 0 730 817 B1**
(45) Date of publication and mention of the grant of the patent: **18.10.2000**
(21) Application number: 96200564.1
(22) Date of filing: 01.03.1996
(51) Int. Cl.: A01B 69/02, A01B 61/04

(54) **A sowing machine**
Sähmaschine
Semoir

(30) Priority: 10.03.1995 NL 9500478
(43) Date of publication of application: 11.09.1996
(73) Proprietor: MAASLAND N.V., 3155 PD Maasland (NL)
(72) Inventor: Bom, Cornelis Johannes Gerardus, 3181 VC Rozenburg (NL); Tollenaar, Eduard, 2295 VR Capelle a/d IJssel (NL)
(74) Representative: Corten, Maurice Jean F.M.

(56) References cited:
- DE-U- 9 102 567
- GB-A- 564 015
- US-A- 1 548 251
- US-A- 2 178 124
- US-A- 4 520 875
- US-A- 4 883 127

## Description

The present invention relates to a sowing machine as described in the preamble of claim 1.

Such a sowing machine is known from document DE-U-9102567.2. The marking element of the known machine is intended for conditions where the soil surface may be covered with sod or stubble, as is the case in medium and no-till operations.

The known marker is placed below an arm connected by an elastically deformable element. This element is curved in the form of a question mark and is pushing against a stop. Only when the resistance of the soil is more than a pre-set value, the marker is pushed backwards and upwards. In case of an obstacle, for example a stone, the marker can so avoid the obstacle without being damaged. This construction has a disadvantage in the case of hard surfaces, for example slightly frozen or dry surfaces that the disc-shaped marking member is unable to break through the surface and therefore only slightly scratches the surface. The imaginary pivot point of the marker in the known construction is placed almost straight above the middle of the marker.

It is the object of the invention to further improve the known marker in that, generally, a favourable construction is obtained and in that, specifically, the marking member will not easily break or become buckled in rough conditions or upon meeting with stones or suchlike obstacles in the field. The invention further aims at improving in the case of soils having a relatively hard upper surface. In such circumstances the marking desired, i.e. a marking line drawn in non-cultivated soil and extending parallel to a working run made, is not always clearly visible for the operator of a tractor carrying the sowing machine. The invention therefore also aims at improving therein.

According to the invention, such will be achieved when the connection comprises the features as defined in the characterising portion of claim 1. A suchlike improved marking member may provide, in many cases, protection for the disc-shaped marker element upon meeting with stones or suchlike obstacles during operation, as the connecting element necessarily extends near the front side of the marking element. Also, the present construction has the effect that there is made use of unevennesses in the field, in such a way that the marking member upon passing them, always acts on the soil surface under spring pressure. This may have a chopping effect, so that soil from a humid layer is uncovered. Because humid soil usually has a darker colour than the dried soil constituting the soil surface, in the marking line there will be produced spogs supporting the visibility of said line which, otherwise, might be only faintly distinguishable.

According to the invention, the marking effect on hard soil surfaces is reinforced when the arm is included in the machine so as to be, at least during operation, movable in height, either by means of a pivot construction, or e.g. by means of a vertical straight guide element. Such a provision may give in, at least to some extent, to the tendency of the marking element to catch behind the obstacle or in a hole, while the arm moves downwards to a limited extent. Consequently, the distance in the direction of travel between the arm and the marking element is increased and, at the same time, the tension in the connecting element is built up. This tension is released when the marking element passes the obstacle, and may result in a jumping effect of the marking element. In such a case, the marking member chops the soil surface upon coming down.

In a favourable embodiment, the connecting element is designed as a leaf spring and, more in particular, as a U-shaped leaf spring, the latter combination having the particular advantage that the marking element, relative to the arm, is movable both in height and in the direction transverse to the plane of the U-shape. When the U-shape, according to the invention, is orientated in the direction of travel, such a connecting element has the combined effect that the marking element is capable of moving across an obstacle as well as sidewards around it.

Moreover, known marking members have the disadvantage that, in a rough field, the unevenness cannot correctly be passed and that, in case of a hole or a track in the soil surface or an obstacle in the form of a stone, the marking member may get twisted or otherwise be susceptible to damage. According to again an other particular aspect of the invention, such a drawback is obviated in a favourable manner by means of a construction in which part of the marking member extends forwardly and upwardly, at least from near the front side of the marking element, in the direction of travel and at a sharp angle relative thereto. Due to the latter construction, the marking element will not catch behind obstacles projecting above the marking element itself, which has a positive influence on the life of the marking member. In this connection the invention also relates to a marking member including a marking element, whose front side or a tangent line thereof is situated at a sharp angle relative to the direction of travel, or including a marking member whose height is very small, e.g. only a few centimetres.

In a particular embodiment, the invented construction is characterized in that a connecting element comprises two parts each extending on either side of the at least imaginary axis and one part thereof extending at least predominantly horizontally. Also, between the arm and the marking element, there is provided a connecting element, extending at least substantially in a space orientated substantially vertically and in the direction of travel and having a width corresponding to that of the connecting element, while further the marking member may be characterized in that a connecting element extends at least near the front side of the marking element in the direction of travel and at a sharp angle relative thereto, via a forwardly and upwardly extending part towards a level situated above the marking element. The above-described characteristics are particularly favourable where the part of the connecting element, which part extends at a sharp angle relative to the direction of travel, passes, via a bending, into a horizontal upper part extending rearwardly from the bending. In this respect the shaft of the spherical segment may be adjustable at a sharp angle relative to a horizontal plane.

For a better understanding of the present invention and to show how the same may be carried into effect, reference will now be made, by way of example, to the accompanying drawings, in which:
Figure 1 shows, in rear view, a marking member for a sowing machine;
Figure 2 is a view taken on the line II-II in Figure 1;
Figure 3 is a view taken on the line III-III in Figure 1, and
Figure 4 is a view taken on the line IV-IV in Figure 2.

In the drawings, corresponding parts have been indicated by the same reference numerals. Furthermore, the invention is by no means restricted to the embodiments shown and described here; they only serve to illustrate the inventive idea.

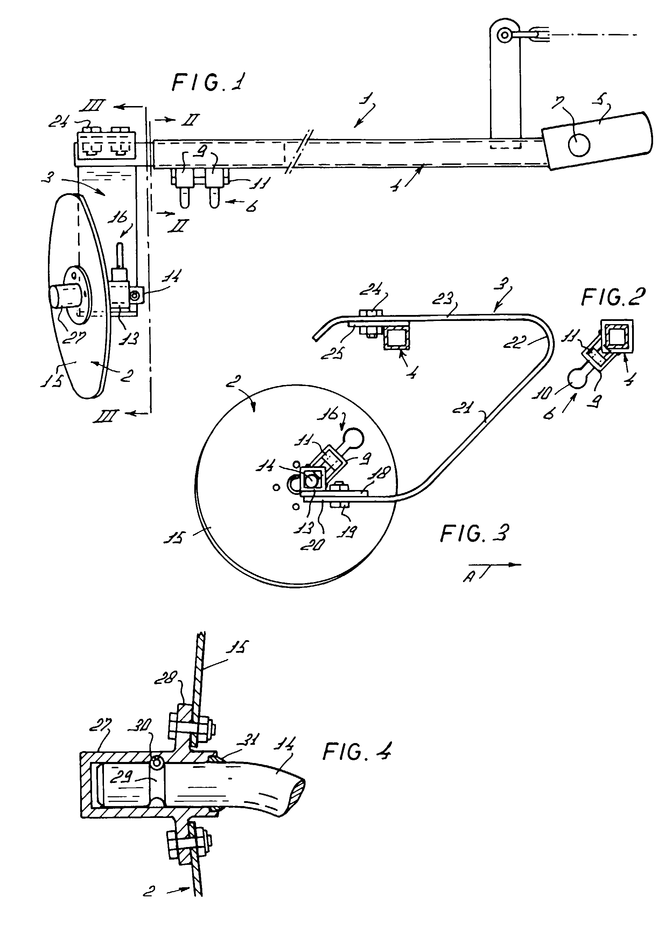

Figure 1 shows, in rear view, a marking member 1 included movably in height in a sowing machine. In the present embodiment, this is realized by pivoting the marking member 1 about a pivot shaft 7 included in a frame portion 5 and orientated in the direction of travel A. The marking member 1 comprises a marking element 2, in the present embodiment constituted by a spherical segment 15, that is rotatable about a centrally disposed shaft 14. The marking element 2 is connected via an elastically deformable connecting element 3 with an arm 4, that is pivotable via the pivot shaft 7. In the present embodiment, the connecting element 3 is constituted by a leaf spring and designated as a leaf spring 3 in the description. The arm 4 is capable of being changed in length telescopically, due to the fact that an outer arm portion is included in an arm portion having a fixed length, so as to fit therein and to be movable therein. The adjustment in length of the arm 4 is effected via a fastening member 6. At some distance from the pivot shaft 7, there is connected an upwardly extending support with the arm 4, for the fastening of a flexible drawing element, e.g. a chain. The drawing element is connected with a (non-shown) switching member included in the sowing machine, for the purpose of putting a marking member 1 into operation and out of operation.

As is shown in Figure 2, the arm 4 is designed in a quadrangular profile. The fastening member 6 comprises two U-shaped loops 9 made of a metal strip. These loops 9 are attached, at some distance from each other, to the arm portion having a fixed length, in such a way that the legs of a loop 9 extend parallel to a diagonal of the quadrangular profile. In the base side of a loop 9 there is provided an opening, through which there has been guided freely movably a screw element 10, which has been screwed in one of at least two screw openings of a screw block 11 extending through both loops 9. Furthermore, a screw element 10 extends through an opening in the fixed portion of the arm 4 until the movable portion thereof.

Figure 3 shows that the connecting element 3, constituted by a leaf spring, is substantially U-shaped bended. In the present embodiment, the open side of this shape is situated at the rear side. The connecting element 3 is arranged in a vertical plane, orientated in the direction of travel A and having a width corresponding with that of the said connecting element. The connection between the arm 4 and the marking element 2 comprises a holder 13 for the shaft 14 of the spherical segment 15, which holder 13 is provided near the lower end of the connecting element 3. The holder 13 comprises a quadrangular profiled tube, on which there is disposed a fastening member 16 corresponding to the above-described fastening member 6. The fastening member 16 clamps the shaft 14 against the holder 13. Against the lower side of the holder 13, there is arranged a plate-shaped supporting element 18 extending forwardly from the holder 13. Against the lower side of the supporting element 18, via two bolts 19 provided in a line transverse to the direction of travel A, there is attached the lower part 20 of the leaf spring 3. The lower part 20 of the connecting element extends horizontally in the direction of travel A at least approximately until the circumference of the spherical segment 15. From the bolts 19, said lower part 20 extends rearwardly at least almost until the end of the plate-shaped supporting element 18. From near the foremost circumferential side of the spherical segment 15, the leaf spring 3, after a bending, extends with a straight part 21 forwardly and upwardly at a sharp angle, in this case amounting to 45°, relative to the direction of travel A. At a level above the spherical segment 15 and at a distance corresponding to the diameter thereof, in front of the foremost circumferential edge of said segment, the leaf spring 3 comprises a bending 14. Via the latter bending the central part 21 passes into an upper part 23 of the leaf spring extending horizontally in rearward direction. At the rear side of the arm 4, also via a number of bolts 24 provided in a line transverse to the direction of travel A, the upper part 23 is connected with an upper supporting element 25. The latter upper supporting element is fixed against the upper side of the movable arm portion 4 and extends rearwardly therefrom. In the present embodiment, the dimension of the supporting element 25 is such that the portion of the arm 4 that is connected with the leaf spring 3, seen in side view, is located above the front side of the spherical segment 15 and also at a level in height thereabove. The horizontal part 23 of the leaf spring 3 ends behind the supporting element 25 in a stump turned off parallel to the central part 21.

Figure 4 shows the shaft 14, which is provided with a bend of approximately 15°, which bend divides the shaft 14 into a non-shown part clamped in the holder 13 and into an outer part, that is rotatably provided in a bearing case 27 attached to the spherical segment 15. The bearing case 27 includes near its inner end a flange 28, via which it is connected with the spherical segment 15. The latter spherical segment includes centrally an opening through which is guided part of the bearing case 27. The outer end portion of the shaft 14 is provided with a ring-shaped recess 29, into which there is inserted a pin 30, guided through the bearing case 27, for the purpose of locking the shaft 14 in the case 27 against axial movement. The inner end of the case 27 is provided with a ring-shaped recess, in which there is disposed, between the shaft 14 and the bearing case 27, a dust sealing ring 31.

The function of the construction according to the invention will be explained in what follows.

Upon meeting with an obstacle, by which in this connection is also meant a hole, the marking element 2 has a tendency to remain behind relative to the arm 4, so that the leaf spring 3 is squeezed, in particular from the bending 22, i.e. is brought under tension, while the arm 4 moves downwards. There is built up a higher tension in the leaf spring, when the marking element 2 is drawn by the arm across the obstacle. After the unevenness has been passed, the leaf spring 3 relaxes, so that the marking element 2 is strongly pushed into the soil, whether or not after having jumped. Due to the relatively sharp working surface, i.e. the circumference of the spherical segment 15, the usually dried surface layer of the soil is broken in such a way that locally there is uncovered a sufficiently large part of a humid soil layer situated more deeply. The latter soil layer usually has a darker colour than that of the dried one. Consequently, there are produced dark spogs supporting the visibility of the line drawn in the soil surface by the marking element 2, which line, under specific conditions, is only faintly distinguishable. For the purpose of obtaining this function, according to the invention, the elastically deformable connecting element 3 may be designed in various ways: a shock absorber extending downwardly from the arm 4, a leaf spring element extending from the arm 4 in the longitudinal direction thereof, a leaf spring element extending from the arm 4 rearwardly and downwardly, or e.g. a construction including two stiff arm portions, interconnected by means of a pivot shaft, which arm portions are kept apart from each other by means of an elastically deformable connecting element.

The marking element 2 being designed as a spherical segment, the rotation of the disc 15 facilitates passing of the soil surface and its relatively sharp outer edge creates a line in the part of the field that has not yet been sowed and possibly not yet been cultivated. This line serves, during a next working run, as a guideline for the operator of a tractor, for the purpose of obtaining a good connection with the surface already sowed. The marking element may also be constituted by a relatively sharp end of a rod-shaped arm, turned off towards the soil, or a different element, such as a sowing coulter, through which there is guided no seed. The present spherical segment 15 is preferably arranged at an angle relative to the direction of travel and at the same time at an angle relative to a vertical plane, so that the width of the marking line, respectively the capacity of the spherical segment 15 to penetrate into the soil is increased. For that purpose, the marking element 2 is disposed rotatably about an end of a bended shaft 14, whose other end is arranged adjustably, i.e. rotatably about its shaft, in the holder 13. After the fastening member 16 has been detached, the shaft can be adjusted in such a way that one of the above-mentioned angles or both of them can be changed.

Tightening the screw elements 10 of a fastening member 6, 16 results in that the screw block 11 is pushed against the base of the loop as soon as the screw element 10 has come into contact with the inner arm portion 4 or the shaft 14. This construction has the advantage that the fastening element 6, 16 will not loosen by vibration, because the screw block 11, which has to be considered as a replacement of a nut, is locked against twisting in the loops. The element to be fastened, in this case the inner arm portion 4 or the shaft 14, has neither a chance to move in the direction of rotation of the screw elements 10.

In the present embodiment, the leaf spring 3 has also the advantage that the marking element 2 is secured against catching behind obstacles or in holes being higher, respectively deeper, than the radius of the spherical segment 15. In the circumstances described, the obliquely directed part 21 ensures a sliding surface, enabling the marking member 1 to pass easily also relatively larger obstacles. Consequently, there will occur no damage to the marking member 1, due to catching of the marking element 2. For the purpose of realizing this function, it is advantageous that the connecting element 3 is arranged at least substantially in a relatively small space, orientated vertically and in the direction of travel, in the immediate vicinity of the marking element 2. In a preferred embodiment, the marking element 2 is at least adapted to be arranged with its lower end inside the above-mentioned space.

The above-described construction has the additional advantage that the leaf spring is capable of making the marking element 2 deflect, under spring pressure, in the lateral direction of the sowing machine, i.e. in the longitudinal direction of the arm 4. In particular when the disc 15 is arranged at an angle relative to the direction of travel, it will be possible to pass an obstacle sidewardly. The spring tension thus built up results in a damping reciprocating, i.e. wagging, movement in lateral direction of the disc 15. Also this movement effects that the soil layer situated under the soil surface is uncovered. The invention also relates, or exclusively relates, to obtaining the above-mentioned wagging movement by means of an elastically deformable connecting element, such as a construction in which there is provided, between the arm 4 and the marking member 1, a leaf spring whose longer side is arranged vertically, or a construction in which an arm for the connecting element 2, by means of one or more springs, is kept in a starting position about a pivot shaft having a vertical direction component.

The invention is not restricted to the aforementioned description, but also relates to all the details of the drawings. The invention furthermore relates to all sorts of alternatives in the construction, of course, falling within the scope of the following claims.

## Claims

1. A sowing machine comprising a marking member (1) including a disc-shaped marking element (2), acting on the soil surface during operation, and an arm (4), by means of which the marking element (2) is included in the sowing machine, in which the marking element (2) is connected to the arm (4) by means of a connection which comprises an elastically deformable connecting element (3), characterized in that the connecting element (3), seen transversely to the direction of operative travel, in the operative mode of the marking member permanently intersects the outline of the disc-shaped marking element (2) in the foremost half thereof.

2. A sowing machine as claimed in claim 1, characterized in that, in the operative mode of the marking member (1), the connecting element intersects the outline within a section constituted by radial angles of 45° on either side of an imaginary horizontally extending radius in said disc-shape of the marking element (2).

3. A sowing machine as claimed in claim 1 or 2, characterized in that, in the operative mode of the marking member (1), the intersecting connecting element (3) extends forwardly and upwardly away from the marking element (2), and predominantly in the direction of operative travel.

4. A sowing machine as claimed in claim 1, 2 or 3, characterized in that the marking element (2) is pivotable about an at least imaginary axis, either orientated substantially upwardly and substantially transversely to the direction of travel (A), or substantially in the direction of travel (A).

5. A sowing machine as claimed in any one of the preceding claims, characterized in that the at least imaginary axis is situated in front of the centre of the marking element (2).

6. A sowing machine as claimed in any one of the preceding claims, characterized in that the at least imaginary axis is situated in front of the arm (4) of the marking member (1).

7. A sowing machine as claimed in any one of the preceding claims, characterized in that the connecting element (3) is constituted by a leaf spring.

8. A sowing machine as claimed in any one of the preceding claims, characterized in that the connecting element (3) is substantially V-shaped or U-shaped and, seen in plan view, is substantially orientated in the direction of travel (A), and is disposed in such a way that the U-shape is open in rearward direction.

9. A sowing machine as claimed in any one of the preceding claims, characterized in that a connecting element (3) comprises two parts (21, 23) each extending on either side of the at least imaginary axis (22) and one part (23) thereof extending at least predominantly horizontally.

10. A sowing machine as claimed in any one of the preceding claims, characterized in that the axis (27) of the marking element (2) extends predominantly transversely to the direction of operative travel (A).

11. A sowing machine as claimed in any one of the preceding claims, characterized in that between the arm (4) and the marking element (2), there is provided a connecting element (3), extending at least substantially in a space orientated substantially vertically and in the direction of travel (A) and having a width corresponding to that of the connecting element (3).

12. A sowing machine as claimed in any one of the preceding claims, characterized in that a connecting element (3) extends at least near the front side of the marking element (2) in the direction of travel and at a sharp angle relative thereto, via a forwardly and upwardly extending part (21) towards a level situated above the marking element (2).

13. A sowing machine as claimed in claim 12, characterized in that the part (21) of the connecting element (3), which part (21) extends at a sharp angle relative to the direction of travel (A), passes, via a bending (14), into a horizontal upper part extending rearwardly from the bending.

## Patentansprüche

1. Sämaschine mit einem Spurreißer (1), der ein im Betrieb auf die Bodenoberfläche einwirkendes, scheibenförmiges Spurreißer-Element (2) sowie einen Arm (4) aufweist, mittels dessen das Spurreißer-Element (2) in der Sämaschine angeordnet ist, in welcher das Spurreißer-Element (2) mit dem Arm (4) durch eine Verbindung verbunden ist, die ein elastisch verformbares Verbindungselement (3) umfaßt,
dadurch gekennzeichnet, daß das Verbindungselement (3) quer zur Arbeitsrichtung betrachtet in der Arbeitslage des Spurreißers ständig die Außenlinie des scheibenförmigen Spurreißer-Elementes (2) in dessen vorderer Hälfte schneidet.

2. Sämaschine nach Anspruch 1,
dadurch gekennzeichnet, daß das Verbindungselement in der Arbeitslage des Spurreißers (1) die Außenlinie innerhalb eines Abschnittes schneidet, der durch radiale Winkel von 45° beiderseits eines gedachten horizontal gerichteten Radius der Kreisform des Spurreißer-Elementes (2) gebildet ist.

3. Sämaschine nach Anspruch 1 oder 2,
dadurch gekennzeichnet, daß sich das schneidende Verbindungselement (3) in der Arbeitslage des Spurreißers (1) nach vorn und oben von dem Spurreißer-Element (2) weg und überwiegend in Arbeitsrichtung erstreckt.

4. Sämaschine nach Anspruch 1, 2 oder 3,
dadurch gekennzeichnet, daß das Spurreißer-Element (2) um eine zumindest gedachte Achse drehbar ist, die sich entweder im wesentlichen aufwärts und im wesentlichen quer zur Arbeitsrichtung (A) oder im wesentlichen in Arbeitsrichtung (A) erstreckt.

5. Sämaschine nach einem der vorhergehenden Ansprüche,
dadurch gekennzeichnet, daß die zumindest gedachte Achse vor der Mitte des Spurreißer-Elementes (2) liegt.

6. Sämaschine nach einem der vorhergehenden Ansprüche,
dadurch gekennzeichnet, daß die zumindest gedachte Achse vor dem Arm (4) des Spurreißers (1) liegt.

7. Sämaschine nach einem der vorhergehenden Ansprüche,
dadurch gekennzeichnet, daß das Verbindungselement (3) durch eine Blattfeder gebildet ist.

8. Sämaschine nach einem der vorhergehenden Ansprüche,
dadurch gekennzeichnet, daß das Verbindungselement (3) im wesentlichen V-förmig oder U-förmig ausgebildet ist und sich in Draufsicht im wesentlichen in Arbeitsrichtung (A) erstreckt und derart angeordnet ist, daß die U-Form nach hinten offen ist.

9. Sämaschine nach einem der vorhergehenden Ansprüche,
dadurch gekennzeichnet, daß ein Verbindungselement (3) zwei Teile (21, 23) umfaßt, die sich jeweils auf einer Seite der zumindest gedachten Achse (22) erstrecken, und von denen ein Teil (23) zumindest überwiegend horizontal ausgerichtet ist.

10. Sämaschine nach einem der vorhergehenden Ansprüche,
dadurch gekennzeichnet, daß sich die Achse (27) des Spurreißer-Elementes (2) überwiegend quer zur Arbeitsrichtung (A) erstreckt.

11. Sämaschine nach einem der vorhergehenden Ansprüche,
dadurch gekennzeichnet, daß zwischen dem Arm (4) und dem Spurreißer-Element (2) ein Verbindungselement (3) vorgesehen ist, das zumindest im wesentlichen in einem Raum angeordnet ist, der sich im wesentlichen in vertikaler Richtung und in Arbeitsrichtung (A) erstreckt und eine Breite aufweist, die der des Verbindungselementes (3) entspricht.

12. Sämaschine nach einem der vorhergehenden Ansprüche,
dadurch gekennzeichnet, daß sich ein Verbindungselement (3) zumindest nahe der Vorderseite des Spurreißer-Elementes (2) in Arbeitsrichtung und in einem spitzen Winkel zu dieser über einen nach vorn und oben gerichteten Teil (21) in eine Position über dem Spurreißer-Element (2) erstreckt.

13. Sämaschine nach Anspruch 12,
dadurch gekennzeichnet, daß der Teil (21) des Verbindungselementes (3), der sich in einem spitzen Winkel zur Arbeitsrichtung (A) erstreckt, über eine Krümmung (14) in einen horizontalen oberen Teil übergeht, der sich von der Krümmung nach hinten erstreckt.

## Revendications

1. Semoir comportant un organe de marquage (1) comportant un élément de marquage en forme de disque (2), agissant sur la surface du sol pendant un fonctionnement, et un bras (4) par l'intermédiaire duquel l'élément de marquage (2) est inclus dans le semoir, dans lequel l'élément de marquage (2) est relié au bras (4) par l'intermédiaire d'une liaison qui comporte un élément de liaison déformable élastiquement (3), caractérisé en ce que l'élément de liaison (3), vu transversalement à la direction du déplacement actif, dans le mode actif de l'organe de marquage, recoupe de manière permanente le contour de l'élément de marquage en forme de disque (2) dans la moitié la plus en avant de celui-ci.

2. Semoir selon la revendication 1, caractérisé en ce que, dans le mode actif de l'organe de marquage (1), l'élément de liaison recoupe le contour dans un tronçon constitué par des angles radiaux de 45° de chaque côté d'un rayon imaginaire s'étendant horizontalement dans ladite forme de disque de l'élément de marquage (2).

3. Semoir selon la revendication 1 ou 2, caractérisé en ce que, dans le mode actif de l'organe de marquage (1), l'élément de liaison recoupant (3) s'étend vers l'avant et vers le haut loin de l'élément de marquage (2), et de manière prédominante en direction du déplacement actif.

4. Semoir selon la revendication 1, 2 ou 3, caractérisé en ce que l'élément de marquage (2) peut pivoter autour d'un axe au moins imaginaire, orienté pratiquement vers le haut et pratiquement transversalement à la direction de déplacement (A), ou pratiquement dans la direction de déplacement (A).

5. Semoir selon l'une quelconque des revendications précédentes, caractérisé en ce que l'axe au moins imaginaire est situé en avant du centre de l'élément de marquage (2).

6. Semoir selon l'une quelconque des revendications précédentes, caractérisé en ce que l'axe au moins imaginaire est situé en avant du bras (4) de l'organe de marquage (1).

7. Semoir selon l'une quelconque des revendications précédentes, caractérisé en ce que l'élément de liaison (3) est constitué d'un ressort à lame.

8. Semoir selon l'une quelconque des revendications précédentes, caractérisé en ce que l'élément de liaison (3) est pratiquement en forme de V ou en forme de U et, en vue de dessus, est pratiquement orienté dans la direction de déplacement (A), et est disposé d'une manière telle que la forme en U est ouverte en direction de l'arrière.

9. Semoir selon l'une quelconque des revendications précédentes, caractérisé en ce qu'un élément de liaison (3) comporte deux parties (21, 23) s'étendant chacune de chaque côté de l'axe au moins imaginaire (22) et une partie (23) de celles-ci s'étend au moins de manière prédominante horizontalement.

10. Semoir selon l'une quelconque des revendications précédentes, caractérisé en ce que l'axe (27) de l'élément de marquage (2) s'étend de manière prédominante transversalement à la direction du déplacement actif (A).

11. Semoir selon l'une quelconque des revendications précédentes, caractérisé en ce qu'un élément de liaison (3) est agencé entre le bras (4) et l'élément de marquage (2), s'étendant au moins sensiblement dans un espace orienté pratiquement verticalement et dans la direction de déplacement (A) et ayant une largeur correspondant à celle de l'élément de liaison (3).

12. Semoir selon l'une quelconque des revendications précédentes, caractérisé en ce qu'un élément de liaison (3) s'étend au moins à proximité du côté avant de l'élément de marquage (2) dans la direction de déplacement et sous un angle aigu par rapport à celle-ci, via une partie s'étendant vers l'avant et vers le haut (21) en direction d'un niveau situé au-dessus de l'élément de marquage (2).

13. Semoir selon la revendication 12, caractérisé en ce que la partie (21) de l'élément de liaison (3), laquelle partie (21) s'étend sous un angle aigu par rapport à la direction de déplacement (A), devient, via une courbure (14), une partie supérieure horizontale s'étendant vers l'arrière à partir de la courbure.
